# EUROPEAN PATENT APPLICATION

(11) **EP 4 091 969 A1**
(43) Date of publication of application: **23.11.2022**
(21) Application number: 21386029.9
(22) Date of filing: 17.05.2021
(51) Int. Cl.: B65G 1/04

(54) **MECHANICAL HANDLING APPARATUS**

(71) Applicant: Ocado Innovation Limited, Hatfield, Herts AL10 9UL (GB)
(72) Inventor: The designation of the inventor has not yet been filed
(74) Representative: Ocado Group IP Department

(57) **Abstract**

An apparatus for manipulating containers or totes, the apparatus being configured to: receive a container from a spur of a semi-automated or automated storage and retrieval system and a first position; move the container to a second position, which corresponds to a predetermined location relative to a loading frame; and to move the container into a first destination location within the loading frame. Optionally, the container may then be moved to a second destination within the loading frame.

## Description

### Technical Field

The present invention relates generally to the field of mechanical handling apparatus and more specifically to an apparatus and method for automatically handling a tote or shipping container, such as might be used in a warehouse or similar environment.

### Background

Online retail businesses selling multiple product lines, such as online grocers and supermarkets, require systems that are able to store tens or even hundreds of thousands of different product lines. The use of single-product stacks in such cases can be impractical, since a very large floor area would be required to accommodate all of the stacks required. Furthermore, it can be desirable only to store small quantities of some items, such as perishables or infrequently-ordered goods, making single-product stacks an inefficient solution.

International patent application WO 98/049075A (Autostore), the contents of which are incorporated herein by reference, describes a system in which multi-product stacks of containers are arranged within a frame structure.

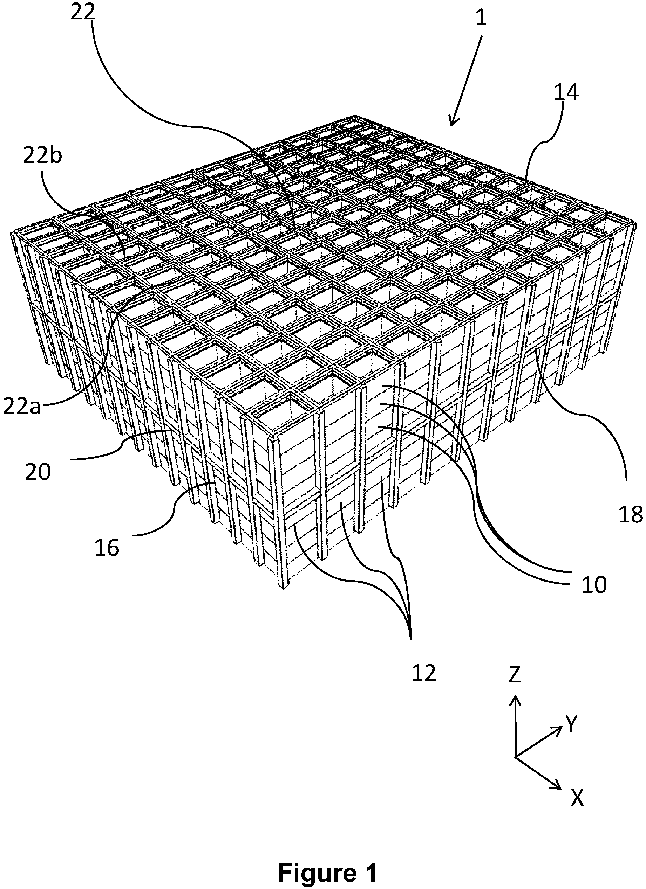

PCT Publication No. WO2015/185628A (Ocado) describes a further known storage and fulfilment system in which stacks of bins or containers are arranged within a framework structure. The bins or containers are accessed by load handling devices operative on tracks located on the top of the frame structure. The load handling devices lift bins or containers out from the stacks, multiple load handling devices co-operating to access bins or containers located in the lowest positions of the stack. A system of this type is illustrated schematically in Figures 1 to 4 of the accompanying drawings.

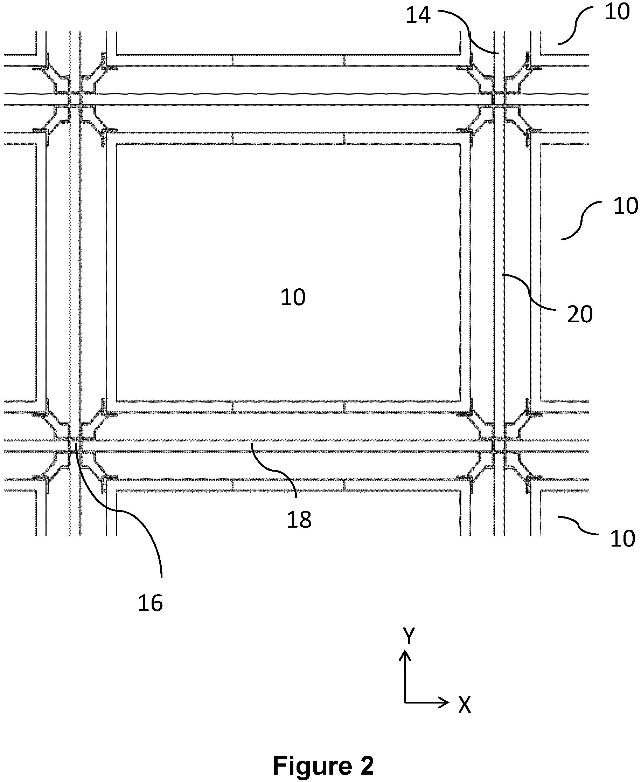

As shown in Figures 1 and 2, stackable containers, known as bins 10, are stacked on top of one another to form stacks 12. The stacks 12 are arranged in a grid framework structure 14 in a warehousing or manufacturing environment. Figure 1 is a schematic perspective view of the framework structure 14, and Figure 2 is a top-down view showing a stack 12 of bins 10 arranged within the framework structure 14. Each bin 10 typically holds a plurality of product items (not shown), and the product items within a bin 10 may be identical, or may be of different product types depending on the application.

The framework structure 14 comprises a plurality of upright members 16 that support horizontal members 18, 20. A first set of parallel horizontal members 18 is arranged perpendicularly to a second set of parallel horizontal members 20 to form a plurality of horizontal grid structures supported by the upright members 16. The members 16, 18, 20 are typically manufactured from metal. The bins 10 are stacked between the members 16, 18, 20 of the framework structure 14, so that the framework structure 14 guards against horizontal movement of the stacks 12 of bins 10, and guides vertical movement of the bins 10.

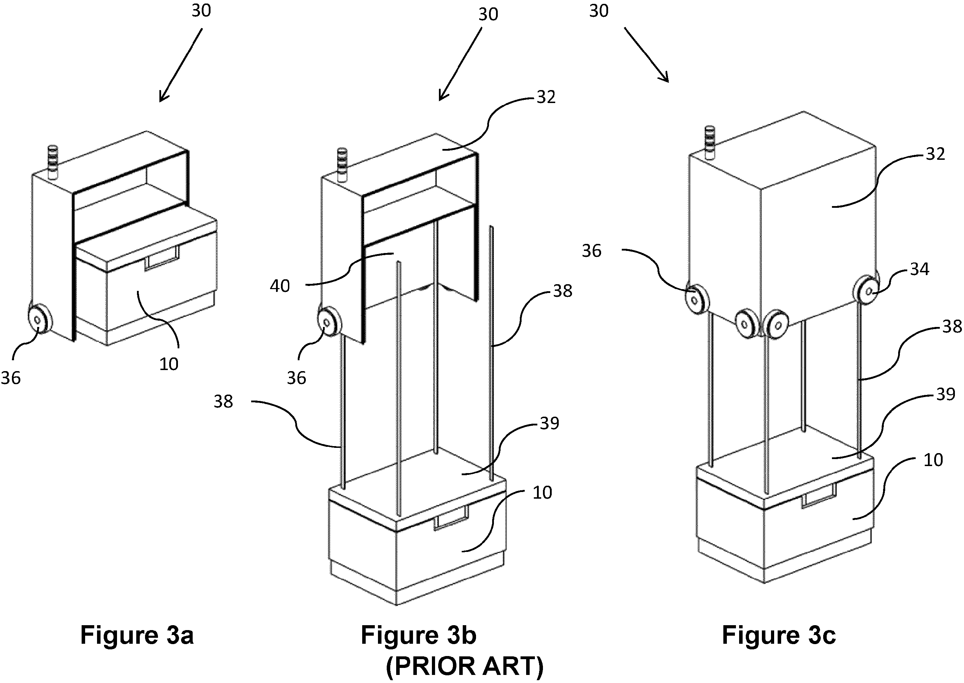

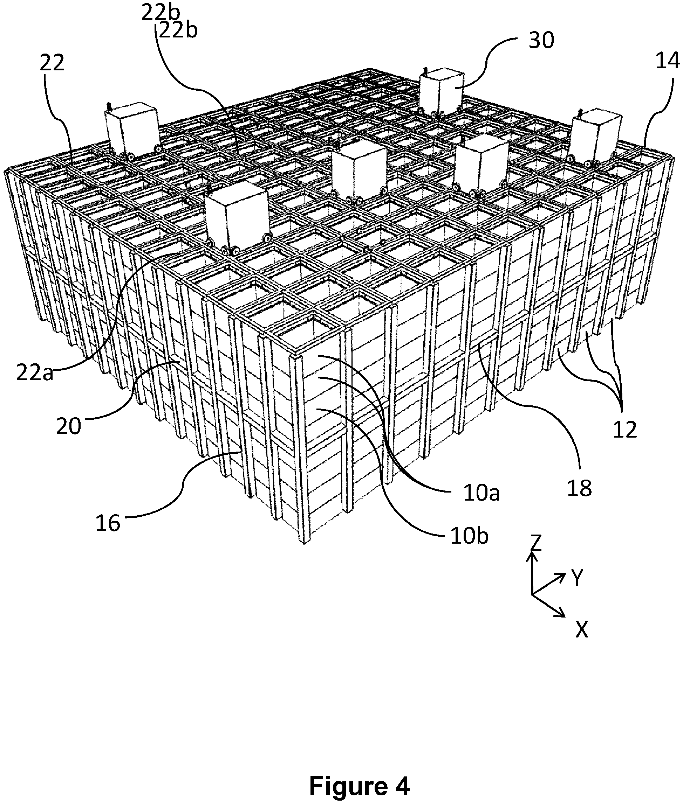

The top level of the frame structure 14 includes rails 22 arranged in a grid pattern across the top of the stacks 12. Referring additionally to Figures 3 and 4, the rails 22 support a plurality of robotic load handling devices 30. A first set 22a of parallel rails 22 guide movement of the load handling devices 30 in a first direction (X) across the top of the frame structure 14, and a second set 22b of parallel rails 22, arranged perpendicular to the first set 22a, guide movement of the load handling devices 30 in a second direction (Y), perpendicular to the first direction. In this way, the rails 22 allow movement of the load handling devices 30 laterally in two dimensions in the horizontal X-Y plane, so that a load handling device 30 can be moved into position above any of the stacks 12.

One form of load handling device 30 is further described in Norwegian patent number 317366, the contents of which are incorporated herein by reference. Figures 3(a) and 3(b) are schematic cross sectionals views of a load handling device 30 depositing a bin 10, and Figure 3(c) is a schematic front perspective view of a load handling device 30 lifting a bin 10. However, there are other forms of load handling device that may be used in combination with the system herein described. For example a further form of robotic load handling device is described in PCT Patent Publication No. WO2015/019055, hereby incorporated by reference, (Ocado) where each robotic load handler only covers one grid space of the frame work structure, thus allowing higher density of load handlers and thus higher throughput for a given sized system.

Each load handling device 30 comprises a vehicle 32 which is arranged to travel in the X and Y directions on the rails 22 of the frame structure 14, above the stacks 12. A first set of wheels 34, consisting of a pair of wheels 34 on the front of the vehicle 32 and a pair of wheels 34 on the back of the vehicle 32, is arranged to engage with two adjacent rails of the first set 22a of rails 22. Similarly, a second set of wheels 36, consisting of a pair of wheels 36 on each side of the vehicle 32, is arranged to engage with two adjacent rails of the second set 22b of rails 22. Each set of wheels 34, 36 can be lifted and lowered, so that either the first set of wheels 34 or the second set of wheels 36 is engaged with the respective set of rails 22a, 22b at any one time.

When the first set of wheels 34 is engaged with the first set of rails 22a and the second set of wheels 36 is lifted clear from the rails 22, the wheels 34 can be driven, by way of a drive mechanism (not shown) housed in the vehicle 32, to move the load handling device 30 in the X direction. To move the load handling device 30 in the Y direction, the first set of wheels 34 is lifted clear of the rails 22, and the second set of wheels 36 is lowered into engagement with the second set of rails 22a. The drive mechanism can then be used to drive the second set of wheels 36 to achieve movement in the Y direction.

The load handling device 30 is equipped with a lifting device. The lifting device 40 comprises a gripper plate 39 is suspended from the body of the load handling device 32 by four cables 38. The cables 38 are connected to a winding mechanism (not shown) housed within the vehicle 32. The cables 38 can be spooled in or out from the load handling device 32, so that the position of the gripper plate 39 with respect to the vehicle 32 can be adjusted in the Z direction.

The gripper plate 39 is adapted to engage with the top of a bin 10. For example, the gripper plate 39 may include pins (not shown) that mate with corresponding holes (not shown) in the rim that forms the top surface of the bin 10, and sliding clips (not shown) that are engageable with the rim to grip the bin 10. The clips are driven to engage with the bin 10 by a suitable drive mechanism housed within the gripper plate 39, which is powered and controlled by signals carried through the cables 38 themselves or through a separate control cable (not shown).

To remove a bin 10 from the top of a stack 12, the load handling device 30 is moved as necessary in the X and Y directions so that the gripper plate 39 is positioned above the stack 12. The gripper plate 39 is then lowered vertically in the Z direction to engage with the bin 10 on the top of the stack 12, as shown in Figure 3(c). The gripper plate 39 grips the bin 10, and is then pulled upwards on the cables 38, with the bin 10 attached. At the top of its vertical travel, the bin 10 is accommodated within the vehicle body 32 and is held above the level of the rails 22. In this way, the load handling device 30 can be moved to a different position in the X-Y plane, carrying the bin 10 along with it, to transport the bin 10 to another location. The cables 38 are long enough to allow the load handling device 30 to retrieve and place bins from any level of a stack 12, including the floor level. The weight of the vehicle 32 may be comprised in part of batteries that are used to power the drive mechanism for the wheels 34, 36.

As shown in Figure 4, a plurality of identical load handling devices 30 are provided, so that each load handling device 30 can operate simultaneously to increase the throughput of the system. The system illustrated in Figure 4 may include specific locations, known as ports, at which bins 10 can be transferred into or out of the system. An additional conveyor system (not shown) is associated with each port, so that bins 10 transported to a port by a load handling device 30 can be transferred to another location by the conveyor system, for example to a picking station (not shown). Similarly, bins 10 can be moved by the conveyor system to a port from an external location, for example to a bin-filling station (not shown), and transported to a stack 12 by the load handling devices 30 to replenish the stock in the system.

Each load handling device 30 can lift and move one bin 10 at a time. If it is necessary to retrieve a bin 10b ("target bin") that is not located on the top of a stack 12, then the overlying bins 10a ("non-target bins") must first be moved to allow access to the target bin 10b. This is achieved in an operation referred to hereafter as "digging".

Referring to Figure 4, during a digging operation, one of the load handling devices 30 sequentially lifts each non-target bin 10a from the stack 12 containing the target bin 10b and places it in a vacant position within another stack 12. The target bin 10b can then be accessed by the load handling device 30 and moved to a port for further transportation.

Each of the load handling devices 30 is under the control of a central computer. Each individual bin 10 in the system is tracked, so that the appropriate bins 10 can be retrieved, transported and replaced as necessary. For example, during a digging operation, the locations of each of the non-target bins 10a is logged, so that the non-target bins 10a can be tracked.

The system described with reference to Figures 1 to 4 has many advantages and is suitable for a wide range of storage and retrieval operations. In particular, it allows very dense storage of product, and it provides a very economical way of storing a huge range of different items in the bins 10, while allowing reasonably economical access to all of the bins 10 when required for picking.

### Summary

In general terms, the invention introduces a mechanical handling apparatus which can receive a shipping container, such as a tote, at a first location, move it to a second location, and then load it into a loading frame. The first location may be the output of a storage and retrieval system, and this output may comprise a spur. The mechanical handling apparatus may be configured to advance the shipping container from a first position within the loading frame to a second position within the loading frame.

According to a first aspect there is provided a shipping container handling apparatus comprising: a support having a first end and a second end; and a first pushing arm, the apparatus being configured to, in use: receive a shipping container at the first end of the support, hold the shipping container on the support; and activate the first pushing arm to push the shipping container from the second end of the support into a loading frame when the apparatus is in a predetermined position with respect to the loading frame.

The apparatus may further comprise one or more optical sensors in communication with one or more processor units, wherein, in use, the data generated by the one or more optical sensors is processed by the one or more processor units to determine the position of the apparatus relative to the frame. The one or more processor units may be further configured, in use, to send control signals to move the apparatus relative to the frame such that the shipping container is pushed into a predetermined aperture of the frame.

The support may further comprise a retractable element which can be selectively activated in use to retain a shipping container at a predetermined position on the support.

The support may, in use, be inclined relative to the apparatus. The support may be rotatably coupled to the apparatus and the apparatus may further comprise an actuator which may, in use, be activated to incline the support relative to the apparatus.

The apparatus may further comprise a second pushing arm, wherein, in use, after the first pushing arm has pushed the shipping container into the frame, the apparatus may be further configured to activate the second pushing arm to move the shipping container from a first position within the frame to a second position within the frame.

The support may further comprise one or more engagement means, the engagement means being activated, in use, to extend from the first end of the apparatus to a spur to receive a shipping container. The engagement means may be further activated to lift the shipping container from the spur. The engagement means may comprise a plurality of rotatable elements. The plurality of rotatable elements comprises a plurality of rollers.

The apparatus may further comprise a detector configured, in use, to detect any objects which protrude from the top of a shipping container when the shipping container is present in the apparatus.

The first pushing arm may comprise a retractable region which can be configured, in use, to be retracted when a shipping container is received from the spur. The retractable region of the first pushing arm may be configured, in use, to be extended such that the retractable region pushes the shipping container when the first pushing arm is activated.

According to a second aspect there is provided a goods handling system comprising a gantry and a shipping container handling apparatus as described above, wherein the shipping container handling apparatus is suspended from the gantry. The gantry may be configured such that the shipping container handling apparatus can move in two perpendicular directions of motion.

The goods handling system may further comprise one or more spurs, the spurs carrying a plurality of shipping containers from an item packing system.

The goods handling system may further comprise one or more frames adapted to receive a plurality of shipping containers.

According to a third aspect there is provided a storage system comprising: a first set of parallel rails or tracks extending in an X-direction, and a second set of parallel rails or tracks extending in a Y-direction transverse to the first set in a substantially horizontal plane to form a grid pattern comprising a plurality of grid spaces; a plurality of stacks of containers located beneath the rails, and arranged such that each stack is located within a footprint of a single grid space; at least one transporting device, the at least one transporting device being arranged to selectively move in the X and/or Y directions, above the stacks on the rails and arranged to transport a container; a picking station arranged to receive a container transported by the at least one transporting device; and a goods handling system as described above.

### Brief Description of the Drawings

Embodiments of the invention will now be described by way of example only with reference to the accompanying drawings, in which like reference numbers designate the same or corresponding parts, and in which:
Figure 1 is a schematic diagram of a framework structure according to a known system;
Figure 2 is a schematic diagram of a top-down view showing a stack of bins arranged within the framework structure of Figure 1;
Figures 3(a) and 3(b) are schematic perspective views of a load handling device depositing a bin and Figure 3(c) is a schematic front perspective view of a load handling device lifting a bin;
Figure 4 is a schematic diagram of a system showing load handling devices operating on the framework structure;
Figure 5 is a schematic diagram of a goods handling system according to an aspect of the present invention;
Figure 6 shows a schematic depiction of a tote handler suspended on a gantry frame;
Figures 7 to 11 show schematic depictions of a tote holder when holding a tote from differing perspectives;
Figure 12 shows a schematic depiction of a tote holder from the front of the tote holder
Figure 13 shows a schematic view of the tray of the tote handler;
Figure 14 shows a schematic depiction of the tray of the tote holder with extended elements;
Figure 15 shows a schematic depiction of a flow chart which describes the process for transferring a tote from a spur to a loading frame;
Figure 16 shows a schematic depiction of a tote handler which has been aligned with an active spur;
Figure 17 shows a schematic depiction of a tote which has been pushed into a location of a loading frame ;
Figures 18 to 21 show schematic depictions of a further example of a tote handler; and
Figure 22 shows a schematic depiction of a computer device which may be used to control a tote handler.

### Detailed Description of Embodiments

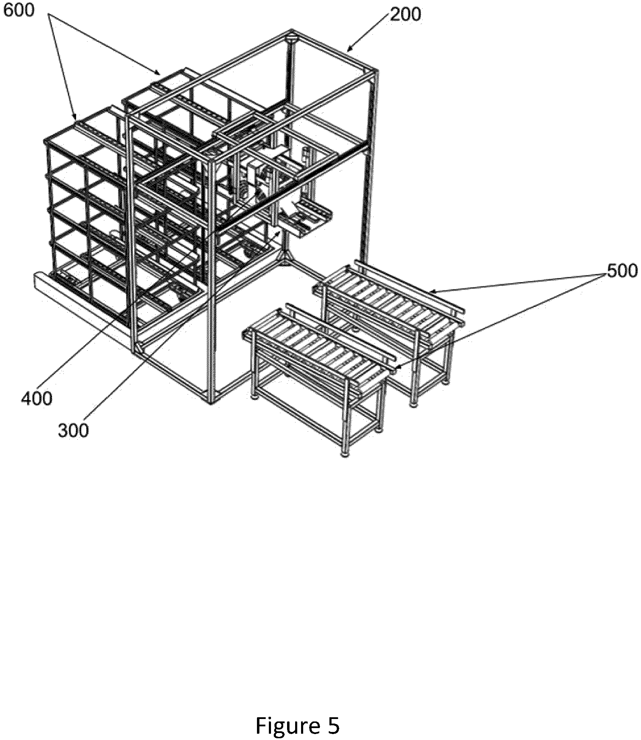

Figure 5 is a schematic diagram of a goods handling system 100 according to an aspect of the present invention. The goods handling systems comprises a gantry frame 200 and a tote handler 300, which is supported from the gantry frame 200. The goods handling system further comprises one or more spurs 500 and one or more loading frames 600. In use, totes, or shipping containers, 400 will be filled with items at a picking station, for example as discussed above with reference to Figures 1 to 4. After the totes have been filled at the picking station then they may be routed to a spur such that they can be loaded into a vehicle, such that the contents of the totes can be delivered to a customer. It should be understood that a typical order may comprise a plurality of totes and the packing system will be co-ordinated such that each of the totes which comprise an order (which may, for example, comprise a first set of totes from a first packing environment (for example refrigerated products) and a second set of totes from a second packing environment (for example ambient products)) are brought together so that they can be loaded onto the same vehicle in a manner which enables efficient unloading and delivery of each order.

Conventionally, the totes received at the one or more spurs 500 are then manually loaded into one or more loading frames, with packing information being provided such that each order can be loaded in an efficient manner. The loaded loading frames can then be loaded into a vehicle, or stored for subsequent loading into a vehicle.

The goods handling system 100 enables a tote 400 to be automatically received from a spur 500 and loaded into a tote handler 300. The tote handler can then be moved on the gantry frame to align itself with the appropriate aperture of one of the loading frames 600 such that the tote can be loaded onto the loading frame.

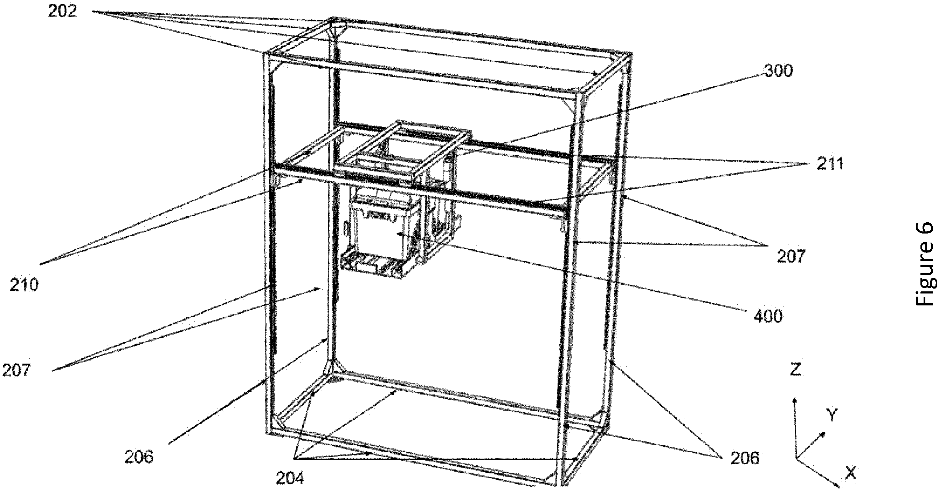

Figure 6 shows a schematic depiction of a tote handler 300 suspended on a gantry frame 200, with a tote received within the tote handler. The gantry frame 200 comprises a base 204, a top 202 and support members 206. Preferably the base 204 describes a rectangular shape and has the same size and shape as the top 202, with each of the support members being perpendicular to both the base and the top, defining a cuboidal space within which the tote handler can be manoeuvred. The gantry frame further comprises a support frame 210 which is coupled to the support members 206 such that the support frame can be moved parallel to the Z-axis shown in Figure 6. The tote handler is supported from the support frame such that it is able to move across the width of the frame, that is parallel to the X-axis shown in Figure 6. Access to the tote handler may be possible from one or both of the short sides for maintenance activities or in order to make additional interventions. Safety interlocks may be provided to enable safe operation of the goods handling system.

The gantry frame enables the tote handler to move in two degrees of freedom with sufficiently high acceleration and velocity to enable efficient automatic tote loading. Such a gantry frame provides a lightweight and compact self-standing structure embedding all the required electrical and electronic components, and does not require any special mounting or alignment. In a preferred example the gantry frame comprises four linear rail guideways 207, with one linear rail guideway provided on each of the support members 206. Furthermore, the gantry frame may comprise two linear rail guideways 211 provided on the support frame. The installation of the gantry frame requires just 4 levelling mounting points on the floor. The following discussion will assume that the gantry frame is installed on a substantially level floor and references to the tote moving 'up' and 'down' should be understood to be referring to movements parallel to the Z-axis and references to the tote moving 'left' and 'right' should be understood to be referring to movements parallel to the X-axis, as is shown in Figure 6. With respect to the gantry frame and the tote holder, references to the 'front' refer to the side facing the loading frame(s) and references to the 'back' refer to the side facing the spur(s).

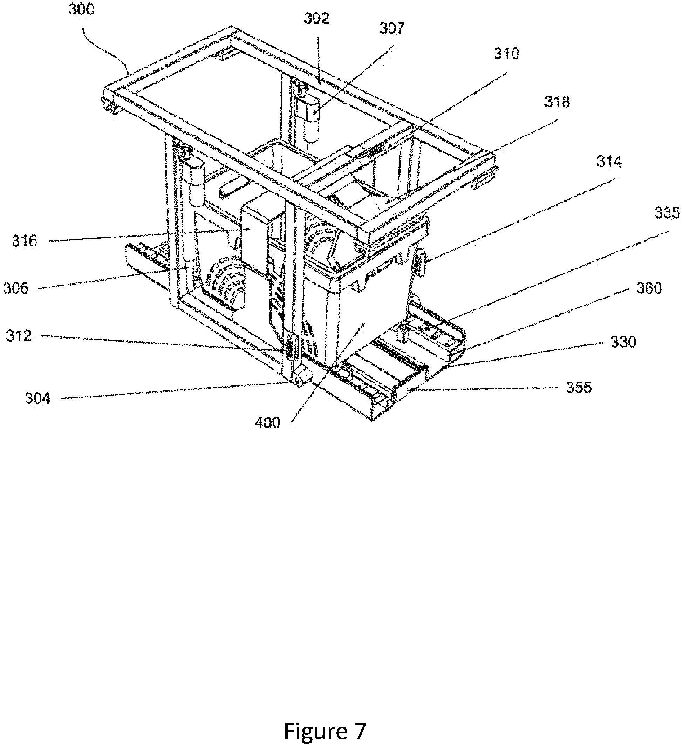

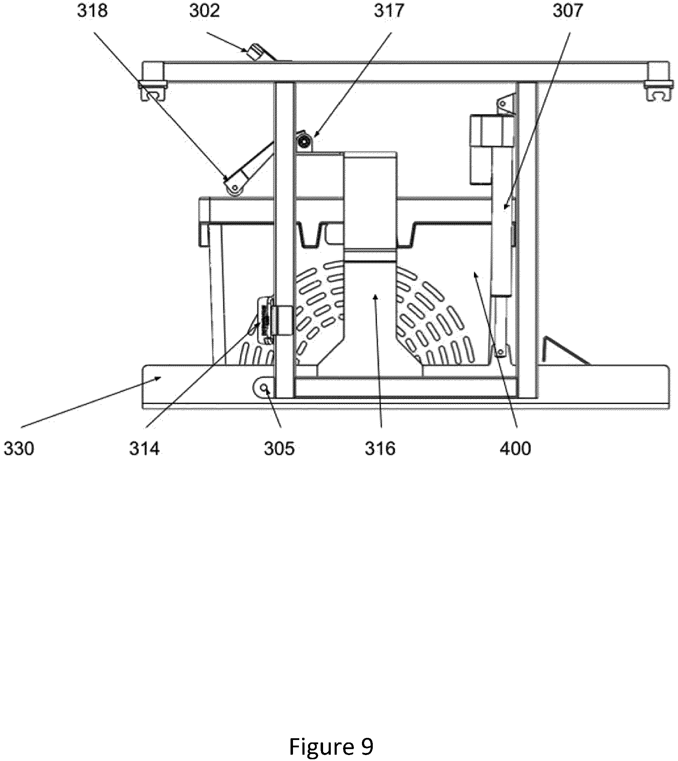

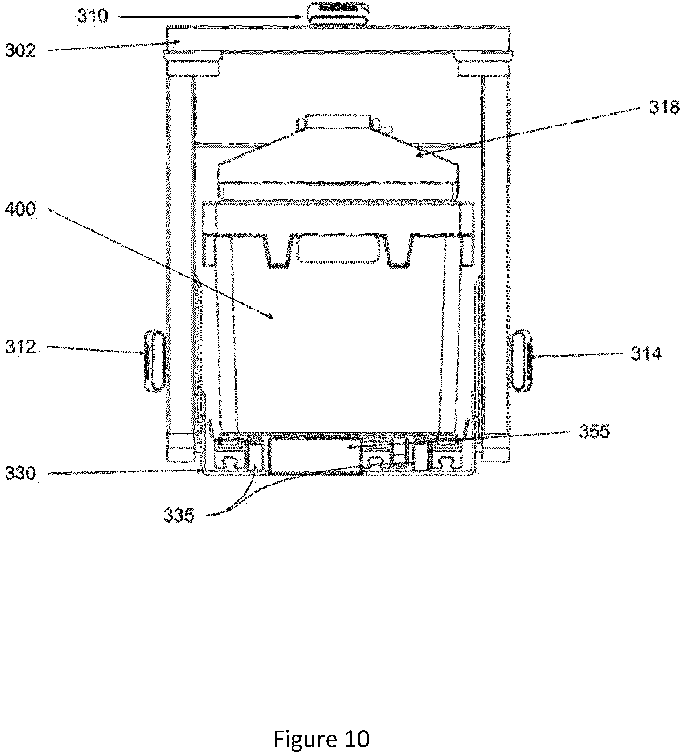

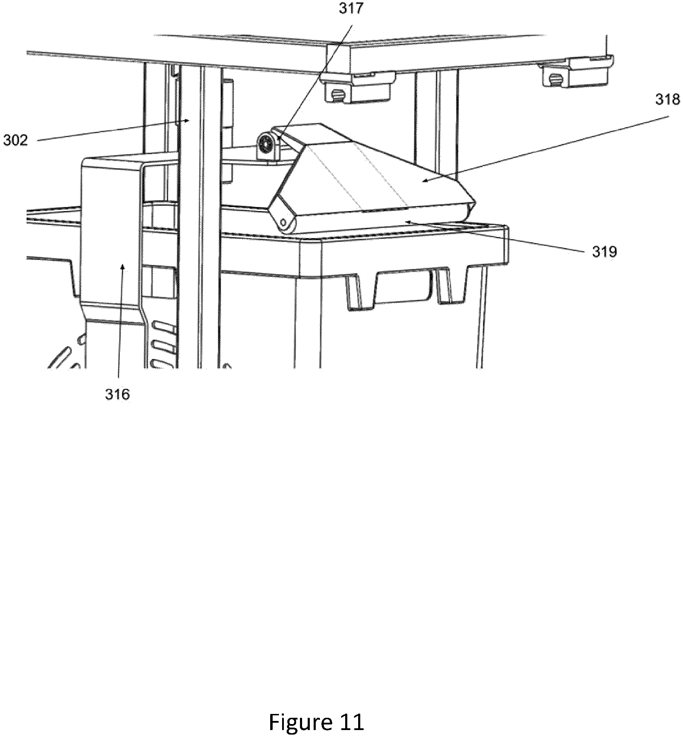

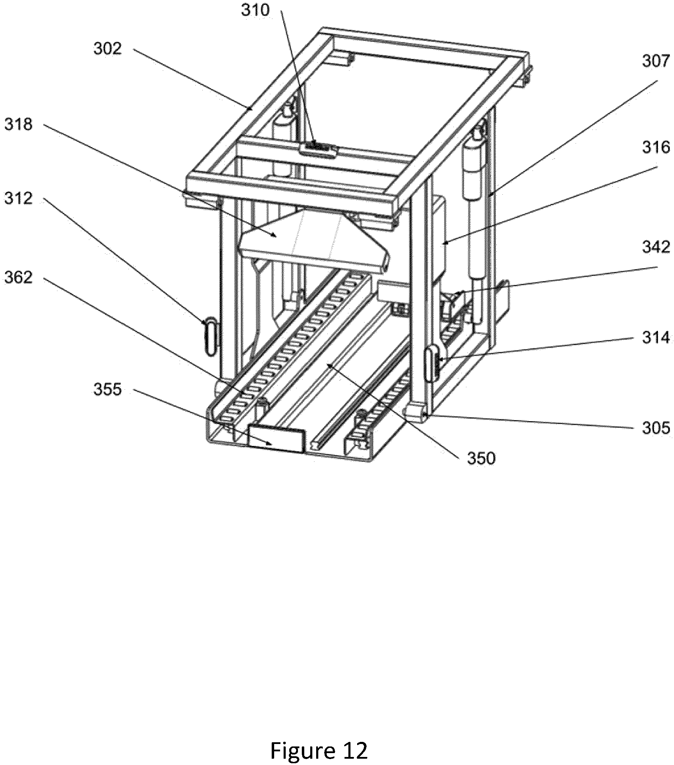

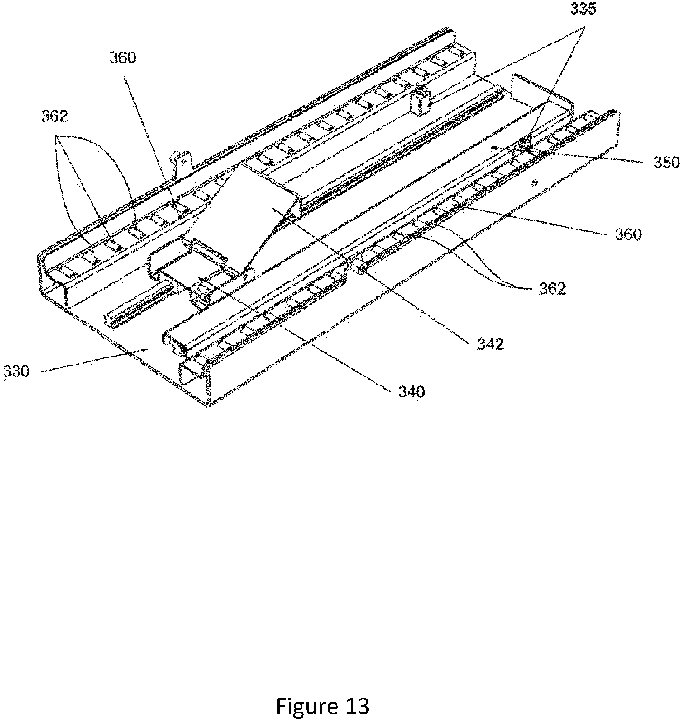

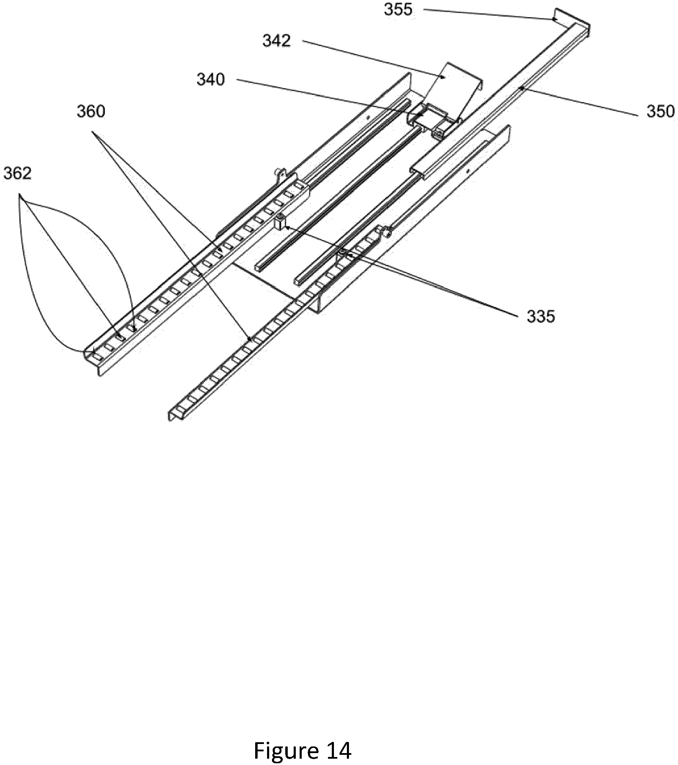

Figures 7 to 11 show schematic depictions of a tote holder 300 when holding a tote 400, Figure 12 shows a schematic depiction of a tote holder 300 without a tote and Figures 13 & 14 show a schematic depiction of a part of a tote holder. The structure and functionality of a tote holder will now be described in relation to Figures 7 to 14. A tote holder 300 comprises a frame 302, which is adapted to engage with the gantry frame such that the tote holder is suspended from the gantry frame and can move along the support frame 210 parallel to the x-axis shown in Figure 6. The tote handler further comprises a tray 330 which is coupled to the tote handler frame 302. The tray can be rotated relative to the tote handler frame (see below), with the tray comprising first and second rotatable joints 304 305 and first and second tray actuators 306 307. The tote handler may further comprise a first camera 310 mounted on an upper front part of the tote handler frame. The tote handler may further comprise second and third cameras 312 314 mounted on each side of the tote handler frame respectively. The second and third cameras may be located nearer to the tray than the top of the frame tote handler frame. A subframe 316 is connected to the tray and is received within the space defined by the tote handler frame. A protruding items detector 318 is connected to the subframe 316 by a rotatable joint 317. The tray comprises two guide rails 360, each of which are located along each side of the tray. Each of the guide rails comprise a plurality of rollers 362, which are disposed along the length of the guide rails so as to assist the movement of a tote. The tote handler further comprises retractable limiters 335 which can be raised into a first position such that they limit the further movement of a tote along the guide rails. If the retractable limiters are moved into a second position then they no longer impede a tote such that it can be moved along the guide rails.

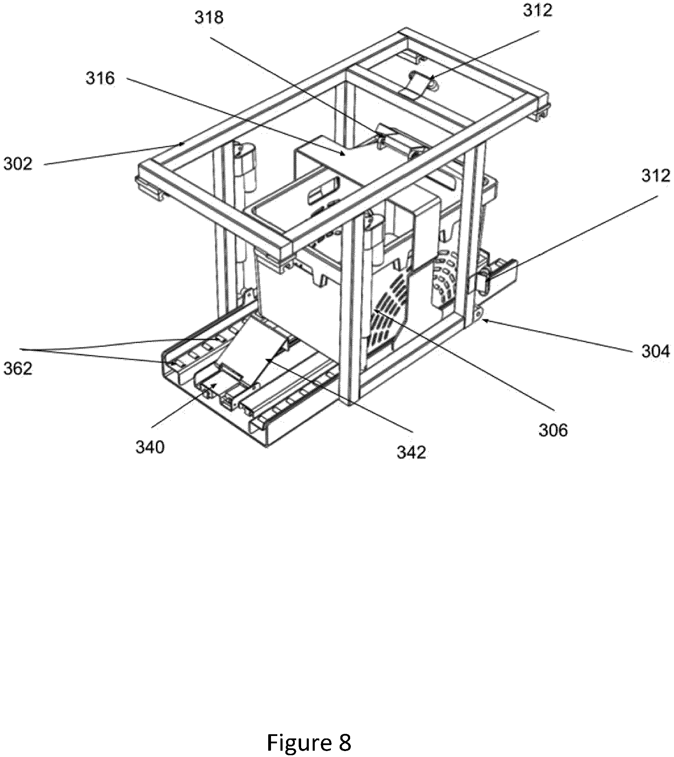

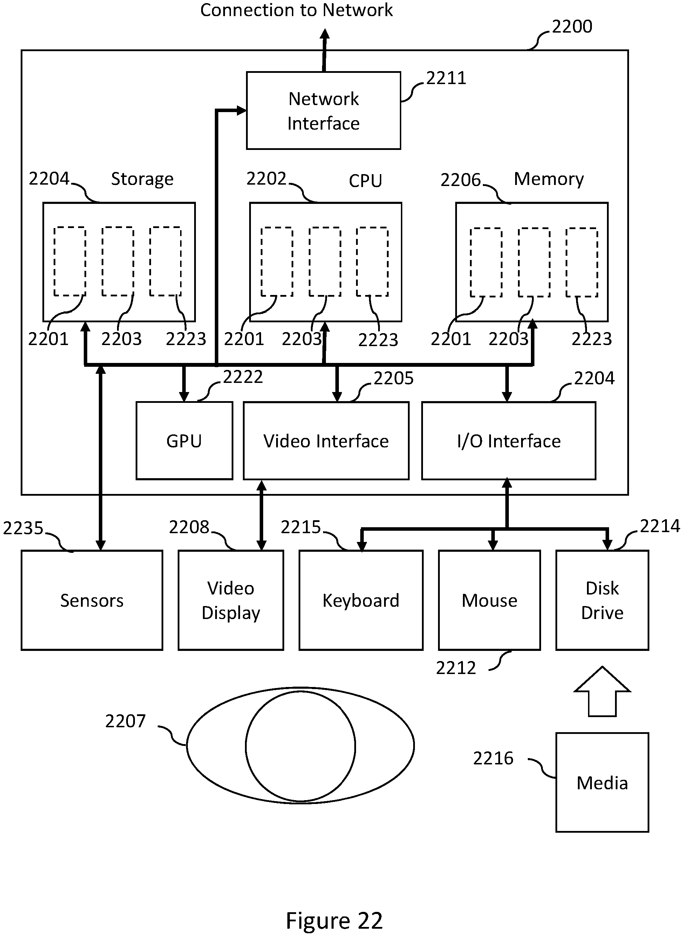

The tote handler further comprises a pushing arm 340 which can be used to push a tote into a loading frame. The pushing arm may comprise a retractable pushing arm flap 342. When the pushing arm is retracted in a first position it is received substantially parallel to the tray 330 such that a tote may move along the guide rails and pass over the pushing arm flap. When the pushing arm flap is moved into a second position (see Figure 8) then it can engage with a face of a tote received within the tote handler. The tray further comprises a pushing rod 350 which can be activated to move a tote from a first position in a loading frame to a second position in the loading frame. The pushing rod may comprise an end plate 355 which engages a surface of a tote when it is being pushed from the first position to the second position within the loading frame. The tote handler may further comprise a computer (see discussion below with reference to Figure 22) which is configured to receive data from the cameras and other sensors, process the received data and then generate instructions to cause the tote handler to move on the gantry frame. It should be understood that the computer which controls the tote handler may be provided elsewhere in the goods handling system, with appropriate cabled connections for transmitting and receiving data between the computer and the tote handler, for example Ethernet cables or equivalent. It will be understood from the following description that the computer is further configured to communicate with a management system such that it can transmit and receive data, such as the central computer which is used to control the action of the load handling devices, as discussed above. Such data may be used to control the operation of the tote handler or the other system components that the tote handler interacts with.

Figure 13 shows a schematic view of the tray 330 of the tote handler 300 without a tote. In one embodiment of the present invention, the guide rails 360 may be fixed relative to the tray and the plurality of rollers 362 are passive. In an alternative embodiment, the guide rails may be extendible to the rear of the tray when a tote is being loaded into the tote handler (see discussion below). In this alternative embodiment, the plurality of rollers 362 may be powered.

Figure 14 shows a schematic depiction of a tray when the retractable pushing arm flap is extended in the second position and the pushing arm is at the limit of its movement. The pushing arm and the pushing arm flap take this position when a tote has been moved from the tote handler into a loading frame. Figure 14 further shows the pushing rod 350 in an extended position, that is the position that the pushing rod takes when a tote has been pushed into a second position in a loading frame. Figure 14 shows a depiction of the alternative embodiment of the present invention and shows the guide rails in an extended position to the rear of the tray. Figure 14 shows that the retractable limiters 335 are fixed relative to the guide rails 360 and move towards the rear of the tray when the guide rails are extended. It should be understood that the retractable limiters may be fixed relative to the tray such that they do not move with the guide rails.

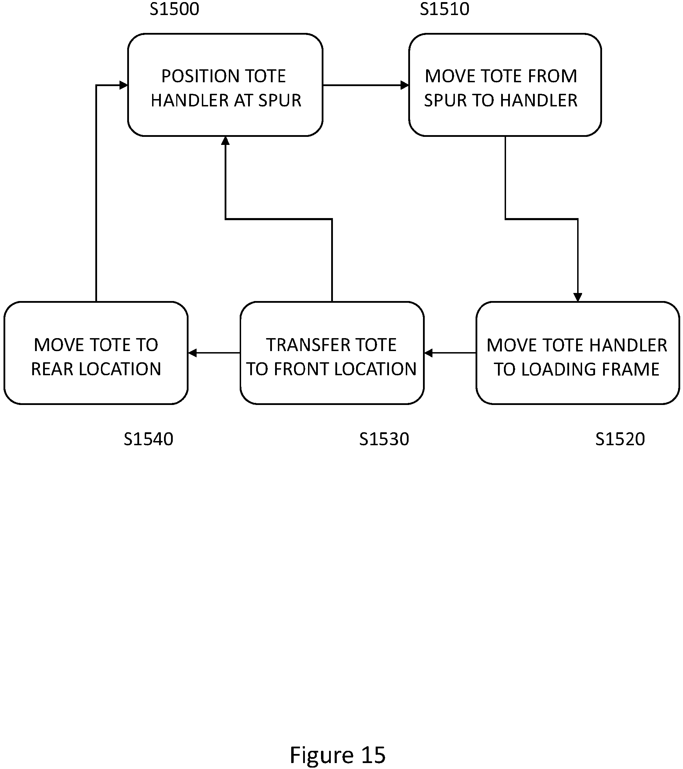

Figure 15 shows a schematic depiction of a flow chart which describes the process for transferring a tote from a spur 500 to a loading frame 600. At step S1500 the tote handler is positioned at a spur which has a tote which is ready to be loaded. At step S1510 the tote is moved from the spur and into the tote handler. At step S1520 the tote handler is moved into a predetermined position with respect to a loading frame. At step S1530 the tote is transferred into a first location within the loading frame. If this first location is the final location for the tote within the loading frame then the process of transferring the tote is complete and the process returns to step S1500. If the first location is not the final location for the tote within the loading frame then the tote is moved to a final location (S1540) and then the process returns to step S1500. Each of steps S1500-S1540 will now be described in greater detail with reference to Figures 5 to 14.

As discussed above, a customer order will comprise one or more ordered items, which will be stored in one or more totes. A typical order may comprise 30-60 items, which may require several totes to hold all of the items. For efficient operation of the retrieval and delivery of an order, each of the one or more totes which comprises an order is likely to be filled at a number of different picking stations. The totes will then need to be packed within a loading frame in an appropriate order such that they can be unpacked from the loading frame in an efficient manner. Each delivery vehicle can accept one or more loading frames and a number of customer orders will be assigned to a single vehicle such that the customer orders may be delivered in an efficient manner. Each delivery route is planned such that customer orders can be made, for example, in a predetermined timeslot on a predetermined date. Thus, when each delivery route is planned and assigned to a particular delivery vehicle then the central computer of the storage and retrieval system will determine which totes need to be loaded onto each of the delivery vehicles and each of the plurality of totes will be assigned to a specific location within a loading frame which will be carried by the vehicle to assist in the efficient unloading of the vehicle and the delivery of the ordered items.

Figure 5 shows an arrangement in which the gantry frame is located next to two loading frames 600. Each of the loading frames 600 comprises four shelves, with each shelf comprising four locations capable of receiving a tote. Each shelf has a front, that is the aspect nearest to the gantry frame, and a back (that is, the aspect furthest from the gantry frame). Each shelf also has a right and left side, with the right and left sides being determined from the front side, such that each shelf comprises a front-right, a front-left, a back-right and a back-left location. The destination of a tote within a loading frame can be defined by an identifier of the loading frame, a shelf of that loading frame and then a location within that shelf. When an order is finalised, the storage and retrieval system may determine the number of totes which are required to hold all of the items which comprise the order and the order will be assigned to a particular delivery vehicle. Loading frame destinations may be assigned to each of the totes which hold the ordered items such that the totes may be loaded in an efficient manner.

When a tote has been packed within the storage and retrieval system it will be routed from a picking station to a spur 500 from which it can be selected by a tote handler 300 and then transferred to the assigned location in a pre-determined loading frame 600. The picking station may be connected to the spur by one or more conveyor belts (or similar apparatuses). It can be seen that Figure 5 shows that a single tote handler is arranged to receive totes from two spurs 500 and can load the totes onto two loading frames 600. It should be understood that this arrangement is purely exemplary and that different numbers of spurs, tote handlers and/or loading frames may be combined in accordance with the operational requirements of the storage and retrieval system.

The arrival of a tote at a spur may be detected (for example, by an optical sensor, such as a photoelectric sensor). The tote handler will move on the gantry frame to a spur which has a tote present and the tote may be identified, for example by an optical sensor, for example a camera, reading a marker, for example a barcode or QR code, affixed to the tote). The identity of the tote may be used to determine the loading frame destination for that tote, for example by querying a management system of the automated storage and retrieval system. Alternatively, the automated storage and retrieval system management system may instruct the tote handler to move to a spur which has a tote present and will inform the tote handler of the assigned frame destination for that tote.

In accordance with the identification of the spur which is carrying the tote, the tote handler will be moved on the gantry frame in the X-axis and/or the Z-axis such that it is aligned with the identified spur in order to be able to receive the tote from the spur (step S1500). Once the tote handler is positioned relative to the spur, then a tote may be moved from the spur into the tote handler (step S1510). In one alternative, the spur may be powered such that the spur can be activated to move the tote along the spur. In such a case, the plurality of rollers 362 of the tote handler may be passive. Once the tote handler is aligned with respect to the spur then the tote handler can be configured to receive the tote from the spur. The retractable limiters 335 may be activated such that they are in the first position, such that they will prevent further movement of the tote along the plurality of rollers located in the guide rails of the tray. The first and second actuators 306 307 are also actuated such that the tray is raised relative to the frame of the tote handler. This elevation will assist the movement of a tote along the passive rollers received within the tray of the tote handler. It should be understood that the activation of the retractable limiters and the first and second actuators may be performed whilst the tote handler is being moved into alignment with the spur in order to provide more efficient operation of a mechanical handling system which incorporates a tote handler as described herein.

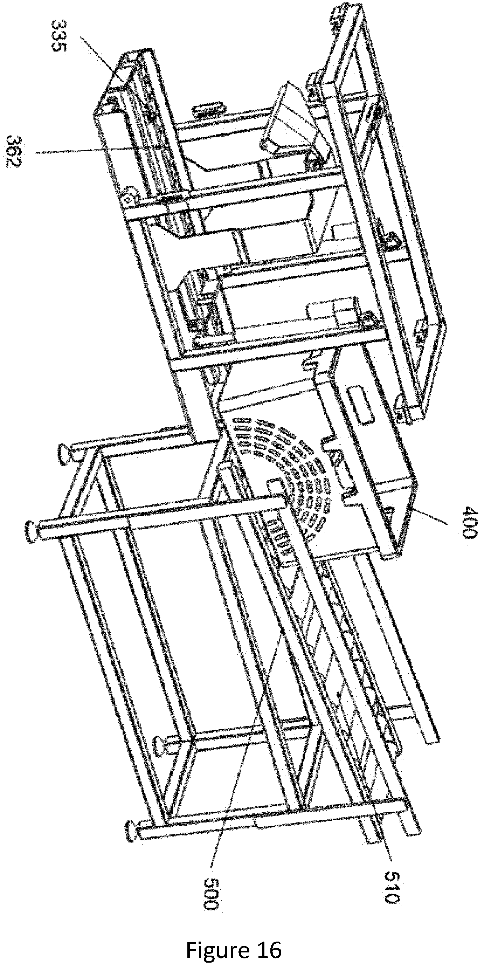

Figure 16 shows a schematic depiction of a tote handler 300 which has been aligned with an active spur 500 (the gantry frame 200 is not shown in Figure 16 for the sake of clarity). It can be seen that the first and second actuators have been actuated such that the tray of the tote handler has been inclined such that it is at substantially the same inclination as the spur 500. When the tote handler is aligned and configured then the spur may be activated such that the active rollers 510 of the spur propel the tote onto the tote handler. The momentum of the tote and the inclination of the tote handler tray will cause the tote to move forwards along the passive rollers 362 of the tote handler until the tote makes contact with the retractable limiters 335, which prevent further movement of the tote and ensures that the tote is in the proper position within the tray of the tote handler. The pushing arm flap 342 may be activated such that it moves into the second position (see Figure 8). In the second position, the pushing arm flap prevents the tote from moving backwards along the tray, so that the tote is secured within the tray.

The degree of inclination of the tray may be transmitted to the tote handler when information regarding the arrival of a tote and the spur on which the tote is carried is sent to the tote handler. Alternatively, the tote handler computer may hold data relating to the spur inclination and may retrieve and process this data when the tote handler is being moved into alignment with a spur. It should be understood that the tote tray may be inclined at the same angle or at a steeper angle than the spur such that the momentum of the tote causes it to move along the tote handler.

In an alternative arrangement, the spur may be passive and is provided with an end stop that prevents a tote from falling off the end of the spur. In such an arrangement, the tote handler will need to lift the tote from the spur such that it can be loaded onto the tote handler. The tote handler will comprise a tray as shown in Figure 14, in which the guide rails can be extended from the rear of the tray. The tote handler may be moved such that it is aligned with the spur, and then the tote handler may be configured to receive a tote from the spur. The retractable limiters 335 may be activated such that they are in the first position, such that they will prevent further movement of the tote along the plurality of rollers located in the guide rails of the tray. The first and second actuators 306 307 are also actuated such that the tray is raised relative to the frame of the tote handler. Again, the activation of the retractable limiters and the first and second actuators may be performed whilst the tote handler is being moved into alignment with the spur in order to provide more efficient operation.

When the tote handler is in position and has been prepared to receive a tote then the guide rails 360 may be extended to the rear of the tote handler such that they are received underneath the tote whilst it is held on the spur. The tote handler may then lift the tote above the end stop of the spur and the guide rails may be retracted such that the tote is moved forward into the tote handler. Once the guide rails are in a fully retracted position, it may be necessary for the tote handler to activate the powered rollers 362 to move the tote forward such that it is in contact with the retractable limiters 335. Once the tote is held within the tote handler then the pushing arm flap 342 may be activated such that it moves into the second position, to secure the tote within the tray of the tote handler.

Figures 6 to 11 show a tote 400 which is secured within a tote handler, with the retractable limiters 335 and the pushing arm flap 342 activated to restrict the movement of the tote. A potential issue is that the tote may have been packed such that items protrude from the top of the tote. If these items are flexible, for example a portion of a plastic bag which holds one or more further items, then this is less likely to cause a problem than a rigid item, such as a cardboard box, when handling the tote or loading the tote into a loading frame. The tote handler comprises a protruding items detector 318, which comprises a roller tube 319 that extends across the width of a tote. The protruding items detector is free to rotate about joint 317 and is configured such that the protruding items detector applies a limited downwards force on the tote (for example, a force of approximately 10N). The protruding items detector is able to sense any vertical displacement of the roller tube 319. As the tote is moved along the tray of the tote holder, the roller tube of the protruding items detector will roll along the upper surface of the tote. If a rigid item protrudes from the tote then this will cause the roller tube to move upwards, causing a signal to be transmitted to the tote handler computer by the protruding items detector. If the transmitted signal indicated that the vertical displacement of the roller tube is greater than a predetermined value then the handling of the tote will be stopped. The predetermined value for the limit of the roller tube vertical displacement may be varied. Furthermore, an alarm may be generated, allowing a manual intervention to be made. The roller arm is designed to minimise the risk that a flexible item, such as a bag, snags the protruding items detector. If a tote has a lid on the top of it, for example for a tote comprising frozen items, then the action of the roller arm will press the lid against the tote.

Once the tote is secured within a tote handler then the tote handler is moved to a predetermined position with respect to the loading frame (step S1520). As discussed previously, the tote is uniquely associated with a location within a loading frame and the tote handler will be moved on the gantry frame in the X-axis and/or the Z-axis such that it is aligned appropriately with the loading frame. The tote handler comprises a plurality of sensors, for example cameras or barcode scanners, which can detect markings on the tote such as bar codes, QR codes, etc. The tote handler can detect these markings to identify the tote and determine the loading frame location in which the tote is to be inserted. This identification of the tote may be in addition to, or as an alternative to, any identification which takes place on the spur. The plurality of cameras may also be used to localise the tote handler to ensure that it is correctly aligned once it has been moved into the predetermined position relative to the loading frame. Data from the plurality of cameras may be processed by the tote handler computer in a machine vision system to localise the tote handler. Image and point cloud data may be analysed using conventional machine vision techniques for example template matching, edge detection, curve fitting etc. The machine vision techniques may also be used for obstacle detection. Although not shown in Figures 7-11, one or more light sources may be provided alongside one or more of the plurality of cameras to provide sufficient illumination for the efficient operation of the machine vision system. Variation in the ambient light levels in the facility that a machine handling system incorporating the present invention is deployed within may mean that the light sources may be monochromatic, with monochromatic filters being added to one or more of the plurality of cameras.

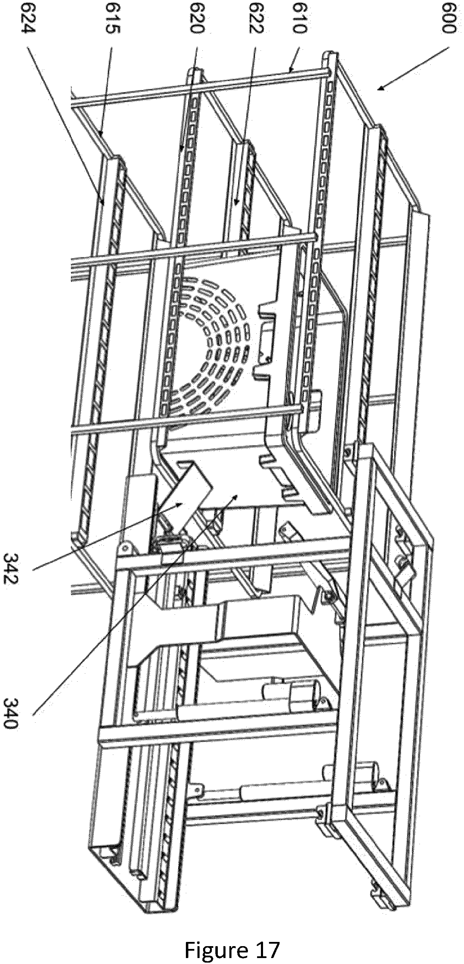

When the tote handler has been moved to the predetermined position and then aligned with the relevant aperture of the loading frame then the tote handler can be transferred into the loading frame (step S1540). The pushing arm 340 may be activated, such that the pushing arm flap 342 acts on the rear of the tote, moving the tote along the tray of the tote handler and into the loading frame. Figure 17 shows a schematic depiction of a tote 400 which has been pushed into a location of a frame 600 by the pushing arm flap 342 of a tote handler. The frame 600 may comprise a plurality of vertical members 610 and horizontal members 615, from which are supported a plurality of loading frame rails 620. The totes are received on the loading frame rails. The loading frame rails may be adapted to receive the totes. For example, one or more rollers may be incorporated within a loading frame rail to assist the movement of a tote when it is being loaded into a loading frame. The loading frame rails may comprise a guardrail which limits the movement of a tote in a direction which is perpendicular to the movement of the tote when it is being loaded into the loading frame. The guardrail may comprise a portion of the loading frame rail which is substantially perpendicular to the rest of the loading frame rail.

The movement of the pushing arm may be controlled such that the tote is moved into the front location of the loading frame, as is shown in Figure 17. The cameras of the tote handler and the machine vision system may be used to control the movement of the pushing arm, or to confirm that the tote has been loaded correctly. If the tote's final position is in the front location of the loading frame, as is shown in Figure 17, then the tote loading process is complete and the tote handler will position itself by a spur to receive a further tote, that is the process described above with reference to Figure 15 will return to step S1500.

It can be seen from Figure 17 that each shelf of a loading frame may comprise, for example, a front location and a back location. If a tote's final position is in a back location then the tote will be loaded into the front location of that shelf as described above. Once the tote has been moved into the front location by the activation of the pushing arm 340 then the pushing rod 350 may be activated to push the tote from the front location to the back location (step S1540). The movement of the pushing rod may be controlled such that the tote is moved into the back location of the loading frame. The cameras of the tote handler and the machine vision system may be used to control the movement of the pushing rod, or to confirm that the tote has been moved into the correct position. In an alternative, additional sensors may be provided to control the movement of the pushing rod or to determine the position of the tote within the frame. Once the tote has been moved into the back location then the tote loading process is complete and the tote handler will position itself by a spur to receive a further tote (that is the process described above with reference to Figure 15 will return to step S1500).

In an alternative, the pushing rod may be omitted and the pushing arm may be adapted such that it can move the tote from the tote handler to the front location of the loading frame and also move the tote from the front location to the back location of the loading frame, if required. In such an alternative, the pushing arm may be extendible or telescopic.

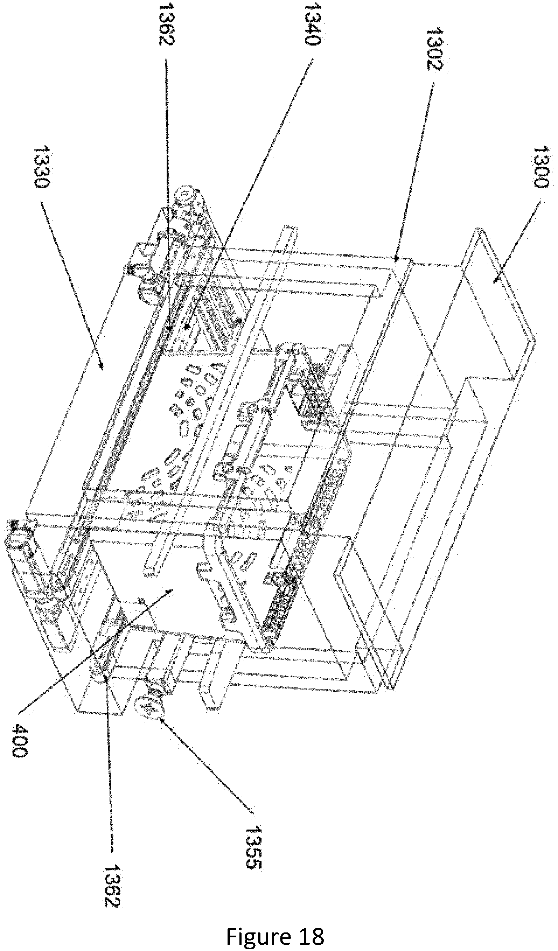

Figures 18 to 21 show schematic depictions of a second example of a tote handler 1300, which may be used to receive a tote 400 from a spur of an automated storage/retrieval system such that the tote may be loaded into a frame, as is described above with reference to Figures 5 to 17. The tote handler 1300 comprises a frame 1302, which is adapted to engage with a gantry frame 200 such that the tote holder is suspended from the gantry frame and can move along the support frame 210 parallel to the x-axis shown in Figure 6. The tote handler 1300 comprises a tray 1330. The tray 1330 comprises two driven conveyor belts 1362, one of which is located along each long edge of the tray. The tote handler 1300 further comprises a pushing arm 1340 which can be used to push a tote into a loading frame. The pushing arm 1340 may comprise a retractable pushing arm flap 1342. When the pushing arm is retracted in a first position it is received substantially parallel to the tray 1330 such that a tote may be moved through the tray by the activation of the driven conveyor belts and pass over the pushing arm flap. When the pushing arm flap is moved into a second position then it can engage with the rear face of a tote received within the tote handler. The tote handler may further comprise a pushing rod 1350 which can be activated to move a tote from a first position in a loading frame to a second position in the loading frame. The pushing rod may comprise an end plate 1355 which engages the rear face of a tote when it is being pushed from the first position to the second position in the loading frame. The pushing rod may be mounted on the frame 1302, above and substantially parallel to the plane of the tray.

The tote handler 1300 may comprise one or more cameras, or other sensors, which can be used to determine the position of the second tote handler relative to the spur and/or the frame, as discussed above, but these are not shown in Figures 18-21. Similarly, although not shown in Figures 18-21, the tote handler 1300 may comprise a protruding items detector, which may be connected to the tray 1330 of the second tote handler via a rotatable joint to a subframe. The tote handler may further comprise a computer (see discussion below with reference to Figure 22) which is configured to receive data from the cameras and other sensors, process the received data and then generate instructions to cause the tote handler to move on the gantry frame. It will be understood from the following description that that the computer may be further configured to communicate with a management system such that it can transmit and receive data, such as the central computer which is used to control the action of the load handling devices, as discussed above. Such data may be used to control the operation of the tote handler or the other system components that the tote handler interacts with. In an alternative, the data received from the camera and other sensors may be transmitted to a remote computer which processes the data and generates the necessary signals to control the movement and operation of the tote handler. The remote computer may be located elsewhere in the goods handling system or as a part of the automatic storage and retrieval system.

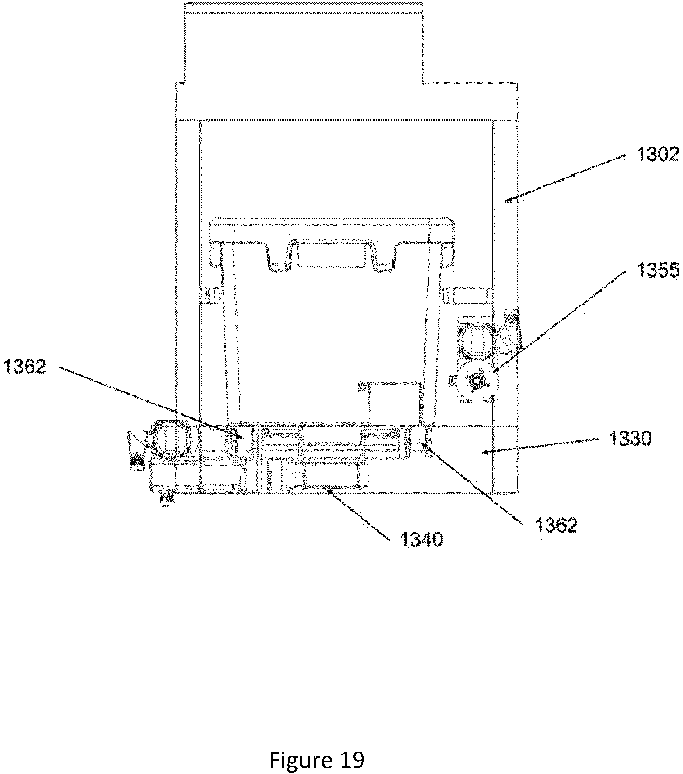

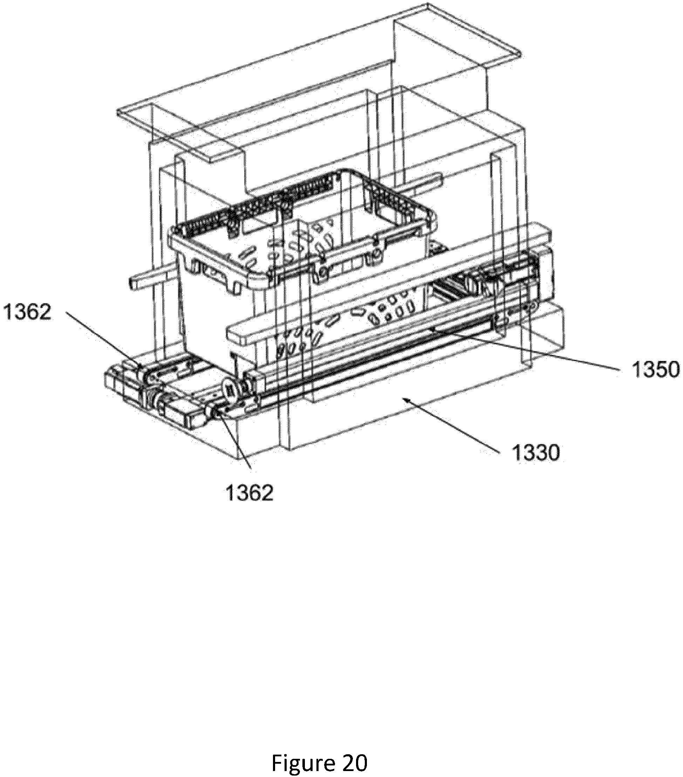

When the tote handler 1300 is aligned with one of the spurs, then the rollers of the spurs may be activated to move a tote onto the tote handler. Once the tote is detected on the conveyor belts 1362 then the conveyor belts may be activated to advance the tote along the length of the tray 1330. Alternatively, the conveyor belts 1362 may be activated at substantially the same time that the spur rollers are activated. The use of the conveyor belts means that the tote handler 1300 does not require the retractable limiters 335 discussed above with reference to Figures 7 to 14. Figure 18 shows a view of the tote handler 1300 from the front and the right, showing a tote which has been moved to the front of the tray 1330. Figures 19 and 20 show a tote 400 positioned at the front of the tray 1330 from the front and the front and left respectively. Once the tote has been moved to the front of the tote handler then the,tote handler may be moved on the gantry frame such that it is aligned with the loading frame location into which the tote is to be loaded. Alternatively, the gantry may begin to move the tote handler once the tote is received on the tote handler and before the tote is moved to the front of the tray as this provides more efficient operation.

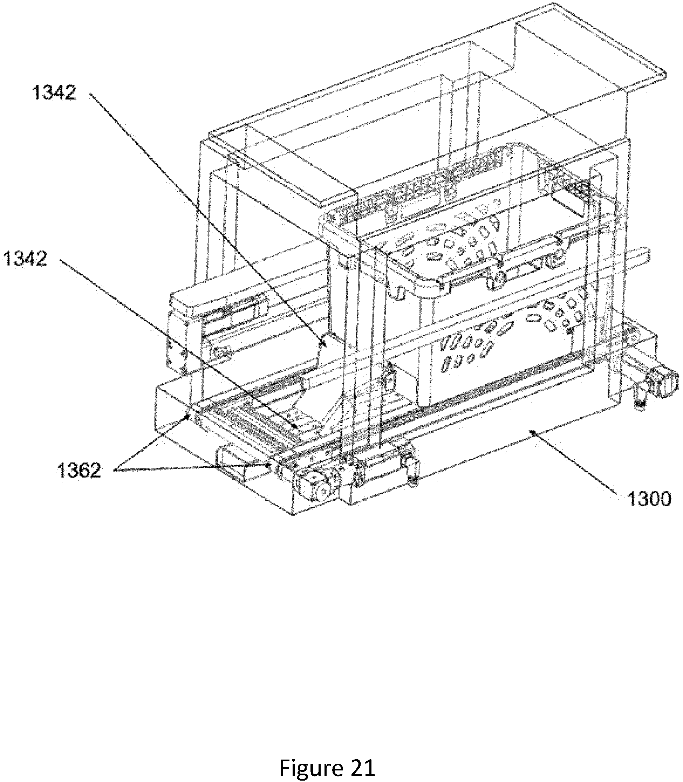

Figure 21 shows a view of the tote handler from the rear and the right when the tote has been moved to the front of the tray. The retractable pushing arm flap 1342 can be seen to have been activated such that it is in the second position and is engaged with the rear face of the tote. When the tote handler 1300 is appropriately aligned with the loading frame (S1520, referring to Figure 15) then the pushing arm may be activated such that the tote is transferred from the tote handler into the front location of the loading frame (S1530). If the tote's destination is the front location of the loading frame then the tote handler will be moved into alignment with a spur to receive a further tote (S1500). If it is required that the tote handler is to be pushed into the back location of the loading frame then the tote handler 1300 will move horizontally and vertically such that activation of the pushing rod 1350 causes the end plate 1355 to move the tote from the front location of the loading frame to the back location of the loading frame. Preferably, the end plate may be substantially aligned with the centre of the rear face of the tote, or a specific region of the rear face of the tote. Once the tote has been moved to the back location of the frame then the pushing rod will be retracted and the tote handler will be moved into alignment with a spur to receive a further tote (S1500).

The operations of the tote handler are controlled by a control system which comprises a computer device, along with associated communications networks, devices, software and firmware. The control system may further comprise an industrial motion controller connected with the motor drives to control all the actuators and receive inputs from them (for example limit switches, position, etc.). Additionally, the motion controller I/O or other distributed I/O devices may be used to get feedback from sensors received on the tote handler, the gantry frame, a spur or other components of the goods handling system. Additionally; a safety controller may be incorporated into the goods handling system to ensure functional safety.

By way of example, Figure 22 shows a schematic depiction of a computer device 2200 that may include a central processing unit ("CPU") 2202 connected to a storage unit 2214 and to a random access memory 2206. The CPU 2202 may process an operating system 2201, application program 2203, and data 2223. The operating system 2201, application program 2203, and data 2223 may be stored in storage unit 2214 and loaded into memory 2206, as may be required. Computer device 2200 may further include a graphics processing unit (GPU) 2222 which is operatively connected to CPU 2202 and to memory 2206 to offload intensive image processing calculations from CPU 2202 and run these calculations in parallel with CPU 2202.

An operator 2207 may interact with the computer device 220 using a video display 2208 connected by a video interface 2205, and various input/output devices such as a keyboard 2215, mouse 2212, and disk drive or solid state drive 2214 connected by an I/O interface 2204. In a known manner, the mouse 2212 may be configured to control movement of a cursor in the video display 2208, and to operate various graphical user interface (GUI) controls appearing in the video display 2208 with a mouse button. The disk drive or solid state drive 2214 may be configured to accept computer readable media 2216. The computer device 2200 may form part of a network via a network interface 2211, allowing the computer device 2200 to communicate with other suitably configured data processing systems (not shown). One or more different types of sensors 2235 may be used to receive input from various sources. These sensors may include the cameras 310 312 314 mounted on the tote handler and other sensors which are incorporated within the tote handler. The computer device may comprise dedicated hardware which is arranged to control the one or more tote handlers in a goods handling system as described above, or comprise a part of a computing platform which is used to operate the automatic storage and retrieval system.

It should be understood that the control of the tote handler may be performed by an appropriately configured industrial computing device, however the invention may be implemented using virtually any manner of computer device including a desktop computer, laptop computer, tablet computer, wireless handheld or a cloud computing platform. The computing device or devices may execute one or more software instances, for example virtual machines and or containers. The present system and method may also be implemented as a computer-readable/useable medium that includes computer program code to enable one or more computer devices to implement each of the various process steps in a method in accordance with the present invention. In case of more than one computer devices performing the entire operation, the computer devices are networked to distribute the various steps of the operation.

It is understood that the terms computer-readable medium or computer useable medium comprises one or more of any type of physical embodiment of the program code. In particular, the computer-readable/useable medium can comprise program code embodied on one or more portable storage articles of manufacture (e.g. an optical disc, a magnetic disk, a tape, etc.), on one or more data storage portioned of a computing device, such as memory associated with a computer and/or a storage system. In further aspects, the disclosure provides systems, devices, methods, and computer programming products, including non-transient machine-readable instruction sets, for use in implementing such methods and enabling the functionality described previously.

### Modifications and Variations

Many modifications and variations can be made to the embodiments described above, without departing from the scope of the present invention.

The foregoing description of embodiments of the invention has been presented for the purpose of illustration and description. It is not intended to be exhaustive or to limit the invention to the precise form disclosed. Modifications and variations can be made without departing from the spirit and scope of the present invention.

According to an aspect, the present invention provides an apparatus for manipulating containers or totes, the apparatus being configured to: receive a container from a spur of a semi-automated or automated storage and retrieval system and a first position; move the container to a second position, which corresponds to a predetermined location relative to a loading frame; and to move the container into a first destination location within the loading frame. Optionally, the container may then be moved to a second destination within the loading frame.

## Claims

1. A shipping container handling apparatus comprising:
a support having a first end and a second end; and a first pushing arm, the apparatus being configured to, in use:
receive a shipping container at the first end of the support,
hold the shipping container on the support; and
activate the first pushing arm to push the shipping container from the second end of the support into a loading frame when the apparatus is in a predetermined position with respect to the loading frame.

2. The apparatus of claim 1 further comprising one or more optical sensors in communication with one or more processor units, wherein, in use, the data generated by the one or more optical sensors is processed by the one or more processor units to determine the position of the apparatus relative to the frame.

3. The apparatus of claim 2, wherein the one or more processor units are further configured, in use, to send control signals to move the apparatus relative to the frame such that the shipping container is pushed into a predetermined aperture of the frame.

4. The apparatus of any of claims 1 to 3, wherein the support further comprises a retractable element which can be selectively activated in use to retain a shipping container at a predetermined position on the support.

5. The apparatus of any of claims 1 to 4, wherein the support can, in use, be inclined relative to the apparatus.

6. The apparatus of claim 5, wherein the support is rotatably coupled to the apparatus and the apparatus further comprises an actuator which can, in use, be activated to incline the support relative to the apparatus.

7. The apparatus of any of claims 1 to 6 wherein the apparatus further comprises a second pushing arm, wherein, in use, after the first pushing arm has pushed the shipping container into the frame, the apparatus being further configured to activate the second pushing arm to move the shipping container from a first position within the frame to a second position within the frame.

8. The apparatus of any of claims 1 to 7, the apparatus further comprising a detector configured, in use, to detect any objects which protrude from the top of a shipping container when the shipping container is present in the apparatus.

9. The apparatus of any of claims 1 to 8 wherein the first pushing arm comprises a retractable region which can be configured, in use, to be retracted when a shipping container is received from the spur.

10. The apparatus of claim 9 wherein the retractable region of the first pushing arm can be configured, in use, to be extended such that the retractable region pushes the shipping container when the first pushing arm is activated.

11. A goods handling system comprising a gantry and a shipping container handling apparatus according to any of claims 1 to 10, wherein the shipping container handling apparatus is suspended from the gantry.

12. The goods handling system of claim 11, wherein the gantry is configured such that the shipping container handling apparatus can move in two perpendicular directions of motion.

13. The goods handling system of claim 11 or claim 12, wherein the goods handling system further comprises one or more spurs, the spurs carrying a plurality of shipping containers from an item packing system.

14. The goods handling system of any of claims 11 to 13, wherein the goods handling system further comprises one or more frames adapted to receive a plurality of shipping containers.

15. A storage system comprising:
a first set of parallel rails or tracks extending in an X-direction, and a second set of parallel rails or tracks extending in a Y-direction transverse to the first set in a substantially horizontal plane to form a grid pattern comprising a plurality of grid spaces;
a plurality of stacks of containers located beneath the rails, and arranged such that each stack is located within a footprint of a single grid space;
at least one transporting device, the at least one transporting device being arranged to selectively move in the X and/or Y directions, above the stacks on the rails and arranged to transport a container;
a picking station arranged to receive a container transported by the at least one transporting device; and
a goods handling system according to any of claims 11 to 14.
